# EUROPEAN PATENT APPLICATION

(11) **EP 4 503 265 A1**
(43) Date of publication of application: **05.02.2025**
(21) Application number: 23794865.8
(22) Date of filing: 21.03.2023
(51) Int. Cl.: H01M 10/615

(54) **SWITCH DEVICE, ELETRIC MOTOR CONTROL DEVICE AND BATTERY HEATING SYSTEM**

(30) Priority: 24.04.2022 CN 202220957949 U
(71) Applicant: Contemporary Amperex Technology Co., Limited, Ningde, Fujian 352100 (CN)
(72) Inventor: ZHAO, Yuanmiao, Ningde, Fujian 352100 (CN); CHEN, Xinwei, Ningde, Fujian 352100 (CN); LI, Zhanliang, Ningde, Fujian 352100 (CN); YAN, Yu, Ningde, Fujian 352100 (CN); DAN, Zhimin, Ningde, Fujian 352100 (CN); CHEN, Wei, Ningde, Fujian 352100 (CN)
(74) Representative: Gong, Jinping
(86) International application number: PCT/CN2023/082742
(87) International publication number: WO 2023/207430

(57) **Abstract**

The present application provides a switch device, a motor control device, a battery heating system, and an electric apparatus. The switch device includes a first switch means and a second switch means which are arranged in a shell. A second terminal of the first switch means and a first terminal of the second switch means are both connected to the outside of the shell; a first terminal of the first switch means and a second terminal of the second switch means are respectively connected to the outside of the shell; and a control terminal of the first switch means and a control terminal of the second switch means are connected to the outside of the shell. The switch device of the present application can use a battery and a motor winding serving as an energy storage means in an electric loop to store and release energy back and forth, thereby achieving the purpose of battery self-heating.

## Description

The present application claims priority to Chinese patent application No. 202220957949.0, filed with the China National Intellectual Property Administration on 24 April, 2022 and entitled "SWITCH DEVICE, MOTOR CONTROL DEVICE AND BATTERY HEATING SYSTEM", which is incorporated herein by reference in its entirety.

### TECHNICAL FIELD

The present application relates to the field of batteries, and specifically relates to a switch device, a motor control device, a battery heating system and an electric apparatus.

### BACKGROUND

Intelligence and electrification are one of the important development directions in the field of intelligent transportation, especially in the field of electrification. With the advancement of materials and technology, the energy density of battery packs is getting higher and higher, and vehicles are also using various types of battery packs as energy sources. Compared with traditional vehicles that mainly use fossil fuels as energy sources, modem vehicles are increasingly using battery packs represented by lithium-ion power batteries as energy sources.

Some power batteries represented by lithium-ion batteries have limited charging and discharging performance at low temperatures because an electrolyte becomes viscous, and thus need to be heated to maximize the charging and discharging performance of the power batteries. However, some existing battery heating methods are inefficient and cannot meet user needs.

### SUMMARY

In view of the above problems, the present application provides a switch device, a motor control device, and a battery heating system, which can improve the battery heating efficiency and meet user needs.

In a first aspect, the present application provides a switch device, including a first switch means and a second switch means which are arranged in a shell, wherein a second terminal of the first switch means and a first terminal of the second switch means are both connected to the outside of the shell; a first terminal of the first switch means and a second terminal of the second switch means are respectively connected to the outside of the shell; and a control terminal of the first switch means and a control terminal of the second switch means are connected to the outside of the shell.

In the technical solution of the embodiment of the present application, the switch device can be started to operate in conjunction with an electric loop in an electric apparatus. Specifically, a battery and a motor winding serving as an energy storage means in the electric loop may be used to store and release energy back and forth to achieve the purpose of battery self-heating. The switch device can improve the battery heating efficiency and meet user needs.

In some embodiments, the switch device further includes an energy storage means arranged in the shell, wherein a first terminal of the energy storage means is connected to the second terminal of the first switch means, the first terminal of the energy storage means is connected to the first terminal of the second switch means, and a second terminal of the energy storage means is connected to the outside of the shell. By providing the energy storage means in the switch device, the energy storage and release of a battery heating circuit can be enhanced, thereby increasing the current during battery self-heating and further improving the heating effect.

In some embodiments, the first switch means includes a first switch and a first diode connected in parallel to each other, and the second switch means includes a second switch and a second diode connected in parallel to each other. Such a design enables the first switch means and the second switch means to cooperate with the electric loop to complete battery self-heating, thereby improving the battery heating efficiency.

In some embodiments, the first switch means includes a third switch, and the second switch means includes a fourth switch. Such a design enables the first switch means and the second switch means to cooperate with the electric loop to complete battery self-heating, thereby improving the battery heating efficiency.

In some embodiments, the first switch means includes a third diode, and the second switch means includes a fifth switch. Such a design enables the first switch means and the second switch means to cooperate with the electric loop to complete battery self-heating, thereby improving the battery heating efficiency.

In some embodiments, the first switch means includes a seventh switch, and the second switch means includes a fourth diode. Such a design enables the first switch means and the second switch means to cooperate with the electric loop to complete battery self-heating, thereby improving the battery heating efficiency.

In some embodiments, the energy storage means includes at least one inductor. Such a design can enhance the energy storage and release of a battery heating circuit, thereby increasing the current during battery self-heating and further improving the heating effect.

In some embodiments, further included is a controller arranged in the shell, wherein a first terminal of the controller is connected to the control terminal of the first switch means and the control terminal of the second switch means respectively, and a second terminal of the controller is led out to the outside of the shell via a wire. By providing the controller in the switch device, the control efficiency of the first switch means and the second switch means can be improved, thereby improving the battery heating efficiency.

In a second aspect, the present application provides a motor control device, which forms an electric loop with a battery and a motor winding, the motor control device including a motor inverter, a motor controller and a high-voltage switch assembly which are arranged in a shell, and a high-voltage harness interface and a low-voltage harness interface which are arranged on the shell; wherein the battery and the motor winding are led out to the high-voltage harness interface via the high-voltage switch assembly, and the high-voltage harness interface includes a neutral electrode terminal, a battery positive electrode terminal and a battery negative electrode terminal; and the motor controller is led out to the low-voltage harness interface via a wire.

In the technical solution of the embodiment of the present application, the motor control device can be started to operate in conjunction with the battery, the motor winding and the switch device. Specifically, the battery and the motor winding serving as an energy storage means can be used to store and release energy back and forth to achieve the purpose of battery self-heating. The motor control device can improve the battery heating efficiency and meet user needs.

In some embodiments, the high-voltage switch assembly includes a positive electrode switch, a negative electrode switch and a neutral electrode switch; a neutral electrode of the motor winding is connected to the neutral electrode terminal via the neutral electrode switch; a positive electrode of the battery is connected to the battery positive electrode terminal via the positive electrode switch; and a negative electrode of the battery is connected to the battery negative electrode terminal via the negative electrode switch. With such a design, when there is no need to connect the battery to the switch device for battery self-heating, the three switches can be kept disconnected, thereby ensuring that the high-voltage harness interface is not energized to prevent people from accidentally getting electric shock.

In a third aspect, the present application provides a battery heating system, including a switch device in the above embodiments, and a motor control device in the above embodiments;
wherein the first terminal of the first switch means is connected to the battery positive electrode terminal; the second terminal of the second switch means is connected to the battery negative electrode terminal; a connection point between the first switch means and the second switch means is connected to the neutral electrode terminal; and the control terminal of the first switch means and the control terminal of the second switch means are connected to the low-voltage harness interface.

In a fourth aspect, the present application provides an electric apparatus, including a motor control device in the above embodiment.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### DESCRIPTION OF DRAWINGS

Various other advantages and benefits will become apparent to those of ordinary skill in the art upon reading the following detailed description of the preferred embodiments. The drawings are for the purpose of illustrating the preferred embodiments only and are not intended to limit the scope of the present application. Moreover, throughout the drawings, the same components are indicated by the same reference signs. In the drawings:
Fig. 1 shows a charging and discharging circuit diagram of a conventional power battery heating system;
Fig. 2 shows a first schematic structural diagram of a switch device according to some embodiments of the present application;
Fig. 3 shows a schematic structural diagram of a switch device and an electric loop according to some embodiments of the present application;
Fig. 4 shows a second schematic structural diagram of a switch device according to some embodiments of the present application;
Fig. 5 shows a third schematic structural diagram of a switch device according to some embodiments of the present application;
Fig. 6 shows a fourth schematic structural diagram of a switch device according to some embodiments of the present application;
Fig. 7 shows a fifth schematic structural diagram of a switch device according to some embodiments of the present application;
Fig. 8 shows a sixth schematic structural diagram of a switch device according to some embodiments of the present application;
Fig. 9 shows a seventh schematic structural diagram of a switch device according to some embodiments of the present application;
Fig. 10 shows a schematic structural diagram of a battery heating system according to some embodiments of the present application;
Fig. 11 shows a first operating mode of the battery heating system according to some embodiments of the present application; and
Fig. 12 shows a second operating mode of the battery heating system according to some embodiments of the present application.

The reference signs in Detailed Description are as follows:
power battery heating system 100, switch device 200;
battery 110, motor inverter 120, motor winding 130, motor controller 140;
first switch means 210, second switch means 220, energy storage means 230, controller 240;
high-voltage switch assembly 310, positive electrode switch 311, negative electrode switch 312, neutral electrode switch 313.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms " including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "plurality of" refers to at least two (including two); similarly, "plurality of groups" refers to at least two (including two) groups, and "plurality of pieces" refers to at least two (including two) pieces.

In the description of the embodiments of the present application, the orientation or position relationships indicated by the technical terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "peripheral" and the like are based on the orientation or position relationships shown in the drawings, and are only for convenience and simplification of the description of the embodiments of the present application, but do not indicate or imply that the apparatuses or elements referred to must have particular orientations, be constructed and operated in particular orientations, and therefore cannot be construed as a limitation of the embodiments of the present application.

In the description of the embodiments of the present application, unless otherwise expressly specified and limited, the technical terms "mounting," "connected," "connecting," "fixing", and the like shall be understood in a broad sense, which, for example, may be a fixed connection, or a detachable connection or an integral connection; may also be a mechanical connection, or an electrical connection; may be a direct connection, or an indirect connection through an intermediate medium, and may be a communication within two elements or an interactive relationship between two elements. For those of ordinary skill in the art, the specific meanings of the above terms in the embodiments of the present application can be understood according to specific situations.

At present, from the development of market situation, application of power batteries is becoming more and more extensive. Power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

The inventors of the present invention have noticed that in an environment of minus thirty degrees Celsius, the charging and discharging performance of a battery pack represented by a lithium battery is basically zero. Therefore, research on battery packs is very important to improve the adaptability of an electric apparatus to the environment. Based on the phenomenon that the low-temperature environment currently has a great impact on the performance of the battery pack, how to quickly heat the battery pack becomes the focus of the present application.

In order to improve the battery heating efficiency, improve the adverse effects of the existing heating methods, and enhance the adaptability of the electric apparatus to low-temperature environments, the applicant has found through research that a switch device can be provided, which can be taken out and connected to an electric apparatus in low-temperature severe cold conditions to quickly heat a power battery. Specifically, the storage and release of energy in a battery self-heating oscillation circuit are enhanced. For example, in a battery self-heating circuit only having a motor winding and a motor inverter, if the inductance of the motor winding is too small, the current cannot be further increased during self-heating, thus affecting the heating effect. In addition, if the inductance of the motor winding is too small, the energy will be stored quickly and need to be released, causing semiconductor switches in the inverter to be turned on and off more frequently. The semiconductor switches need to withstand the superimposed impact of the turn-off spike voltage and higher switch losses, which are likely to affect the life of the inverter.

Based on the above considerations, in order to solve the problem of low heating efficiency caused by the small inductance of the motor winding and the problem of affecting the life of the inverter, the inventors have designed a switch device after in-depth research. The purpose of arranging a first switch means and a second switch means in the switch device is to control the turning on of a current or heating loop. Turning on the first switch means can connect an inductor to a positive electrode of the battery, and energy stored in the inductor flows to the positive electrode; and turning on the second switch means can connect the inductor to a negative electrode of the battery, and the energy stored in the inductor flows to the negative electrode. This design allows current in the same direction to flow through the motor winding, greatly reducing the noise of the motor while minimizing the impact on the life of the inverter.

The switch device and the motor control device disclosed in the embodiments of the present application may be used in, but not limited to, an electric apparatus such as a vehicle, a ship, or an aircraft. A battery heating system composed of the switch device and the motor control device disclosed in the present application may be used, which is helpful to improve the battery self-heating efficiency and meet user needs.

The embodiments of the present application provide an electric apparatus of a battery heating system. The electric apparatus may be, but is not limited to, an electric toy, an electric tool, an electric bicycle, an electric vehicle, a ship, a spacecraft, etc. The electric toy may include a fixed or mobile electric toy, such as a game console, an electric car toy, an electric ship toy, and an electric airplane toy. The spacecraft may include an airplane, a rocket, a space shuttle, a spaceship, etc.

In order to avoid unnecessary cost when heating the power battery, the power battery may be heated by using a motor loop.

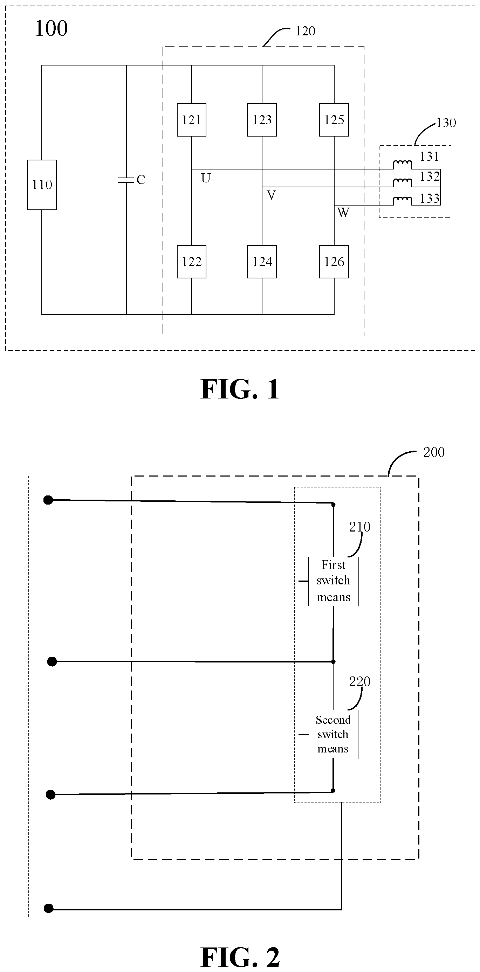

Fig. 1 shows a charging and discharging circuit diagram of a conventional power battery heating system. As shown in Fig. 1, the power battery heating system 100 may include a battery 110, a motor inverter 120 connected to the battery 110, and a motor winding 130 connected to the motor inverter 120. The power battery heating system 100 further includes a motor controller 140 for controlling the motor inverter 120.

The battery 110 may be implemented not only by a power battery itself but also by an external battery such as a charging pile. The heating energy provided by the external battery may be, for example, the output of an external DC charger, or the rectified output of an external AC charger. This is not specifically limited here.

The motor inverter 120 may be implemented by various types of switches. For example, the motor inverter 120 may be implemented by an inverter in a motor driving system, in which the inverter may be implemented by bridge arm switches of an insulated gate bipolar transistor (IGBT). Specifically, the number of bridge arms of the inverter is the same as the number of windings of the motor winding 130. For example, the motor winding 130 includes a three-phase winding motor, and the inverter includes three phase bridge arms, namely, a U-phase bridge arm, a V-phase bridge arm, and a W-phase bridge arm. Each of the three phase bridge arms has an upper bridge arm and a lower bridge arm, and the upper bridge arm and the lower bridge arm are respectively provided with a switch unit. That is, the motor inverter 120 includes an upper bridge arm switch 121 and a lower bridge arm switch 122 in the U-phase bridge arm, an upper bridge arm switch 123 and a lower bridge arm switch 124 in the V-phase bridge arm, and an upper bridge arm switch 125 and a lower bridge arm switch 126 in the W-phase bridge arm.

The motor winding 130 may specifically include: a winding 131 connected to the U-phase bridge arm, a winding 132 connected to the V-phase bridge arm, and a winding 133 connected to the W-phase bridge arm.

It should be noted that the motor winding 130 is not limited to the three-phase winding motor, but may also be a six-phase winding motor, a twelve-phase winding motor, etc. Correspondingly, the motor inverter 120 may include three phase bridge arms, six phase bridge arms, twelve phase bridge arms, etc.

In some embodiments, the current may be modulated by controlling the switches in the motor inverter 120 to be turned on and off periodically. For example, the current is modulated by controlling a target upper bridge arm switch and a target lower bridge arm switch in the motor inverter 120 to be turned on and off periodically. In one example, if the target upper bridge arm switch is the upper bridge arm switch 121, the target lower bridge arm switch is the lower bridge arm switch 124 and/or the lower bridge arm switch 126.

It should be noted that the target upper bridge arm switch and the target lower bridge arm switch that are periodically turned on and off in each cycle may be the same or varied. This is not limited here. For example, the upper bridge arm switch 121 and the lower bridge arm switch 124 are controlled to be turned on and off in each cycle. For another example, in a first cycle, the upper bridge arm switch 121 and the lower bridge arm switch 124 are controlled to be turned on and off; in a second cycle, the upper bridge arm switch 123 and the lower bridge arm switch 122 are controlled to be turned on and off; and in a third cycle, the upper bridge arm switch 121, the lower bridge arm switch 124 and the lower bridge arm switch 126 are controlled to be turned on and off. That is, in different cycles, the target upper bridge arm switch and lower bridge arm switch to be controlled may be varied.

It can be seen therefrom that, using the charging and discharging circuit shown in Fig. 1, the target switches to be turned on include at least one upper bridge arm switch and at least one lower bridge arm switch, and the at least one upper bridge arm switch and the at least one lower bridge arm switch are located on different bridge arms. Therefore, all the upper bridge arms or lower bridge arms cannot be turned on in one cycle, so the current directions in different loops formed between the battery, the target upper bridge arm switch, the target lower bridge arm switch and the motor winding are different, thereby generating an alternating current.

The magnetomotive force of a single-phase winding is a pulsating magnetomotive force distributed in a step shape in space and alternating over time according to the change rule of the current. Therefore, the superposition of the magnetomotive forces of three single-phase windings is a resultant magnetic field of a three-phase winding. Generally, during heating, the currents flowing into the three-phase winding of a three-phase winding motor are not completely equal in magnitude, the currents flowing through two windings thereof are out of phase by 180 degrees, and the currents of two phases without a phase difference are equal in magnitude. This will cause the currents of three phases flowing through the motor winding to be asymmetrical with each other, and the high current frequency will cause large vibration and noise of the motor during the heating of the power battery.

According to some embodiments of the present application, referring to Fig. 2, Fig. 2 shows a schematic block diagram of a switch device 200 according to an embodiment of the present application. The switch device 200 includes a first switch means 210 and a second switch means 220 arranged in a shell. A second terminal of the first switch means 210 is connected to a first terminal of the second switch means 220 via a wire; a first terminal of the first switch means 210 and a second terminal of the second switch means 220 are respectively led out to the outside of the shell via wires; a connection point between the first switch means 210 and the second switch means 220 is led out to the outside of the shell via a wire, and the connection point between the first switch means 210 and the second switch means 220 is located on a wire between the first switch means 210 and the second switch means 220; and a control terminal of the first switch means 210 and a control terminal of the second switch means 220 are led out to the outside of the shell via wires.

The switch device according to the embodiments of the present application can be started to operate in conjunction with an electric loop in an electric apparatus. Specifically, a battery and a motor winding serving as an energy storage means in the electric loop may be used to store and release energy back and forth to achieve the purpose of battery self-heating.

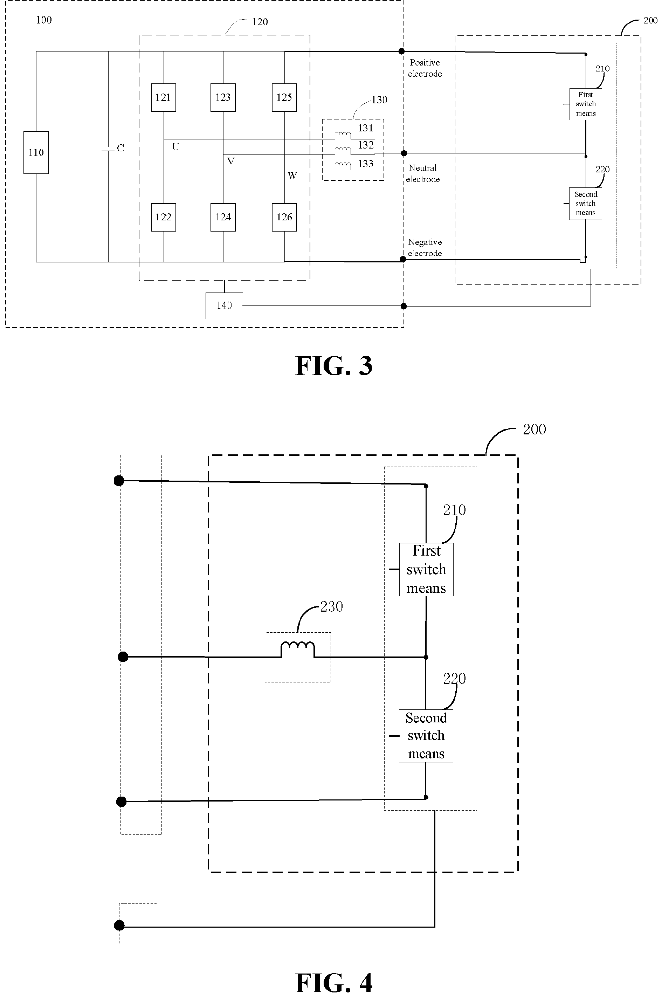

Specifically, as shown in Fig. 3, the first terminal of the first switch means 210 is configured to be connected to a positive electrode of the battery 110, the second terminal of the second switch means 220 is configured to be connected to a negative electrode of the battery 110, the connection point between the first switch means 210 and the second switch means 220 is configured to be connected to a neutral electrode of the motor winding 130, and the control terminal of the first switch means 210 and the control terminal of the second switch means 220 are configured to be connected to a controller 140, so that the controller 140 controls the turning on and off of the first switch means 210 and the second switch means 220, to form an alternating charging loop and discharging loop between the battery and the motor winding, and an AC waveform current is generated in a charging and discharging circuit, thereby achieving the effect of heating the battery.

According to some embodiments of the present application, as shown in Fig. 4, the switch device 200 may further include an energy storage means 230 arranged in the shell. A first terminal of the energy storage means 230 is connected to the connection point between the first switch means 210 and the second switch means 220 via a wire, and a second terminal of the energy storage means 230 is led out to the outside of the shell via a wire.

According to some embodiments of the present application, optionally, the energy storage means 230 includes at least one inductor. For example, a power inductor with a larger inductance may be selected.

By providing the energy storage means 230 in the switch device 200, the energy storage and release of a battery heating circuit can be enhanced, thereby increasing the current during battery self-heating and further improving the heating effect.

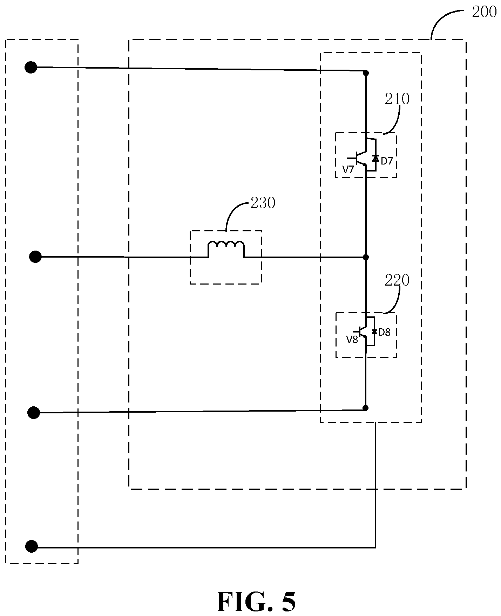

According to some embodiments of the present application, as shown in Fig. 5, the first switch means 210 includes a first switch V7 and a first diode D7 connected in parallel to each other, and the second switch means 220 includes a second switch V8 and a second diode D8 connected in parallel to each other. A cathode of the first diode D7 is connected to the positive electrode of the battery 110, an anode of the first diode D7 is connected to a cathode of the second diode D8, and an anode of the second diode D8 is connected to the negative electrode of the battery 110.

The first switch V7 and the second switch V8 may both be switching transistors, and the first diode D7 and the second diode D8 may both be freewheeling diodes. The switching transistor and the freewheeling diode can be both called insulated gate bipolar transistors (IGBTs). The freewheeling diodes are generally used with inductors. When the current in an inductor changes suddenly, the voltage across the inductor will change suddenly, which may damage other elements in a circuit loop. When used with a freewheeling diode, the current in the inductor can change more smoothly, avoiding sudden voltage changes and improving the safety of the circuit. Therefore, the first switch means 210 and the second switch means 220 both adopt a structure in which a switch and a freewheeling diode are connected in parallel, which can not only realize the switch function, but can also realize the switching between the charging loop and the discharging loop by controlling the turning on or off of the first switch means 210 and the second switch means 220. The freewheeling diode can also be used to avoid sudden voltage changes, thereby improving the safety of the entire charging and discharging circuit.

When the first switch V7 is closed, the first switch V7 is equivalent to a wire, and current can flow bidirectionally at the closed first switch V7. When the first switch V7 is opened, unidirectional current flow from the anode of the first diode D7 to the cathode thereof can be realized at the first diode D7. The structures of the second switch V8 and the second diode D8 and the function they play on the current flow direction are the same as those of the first switch V7 and the first diode D7.

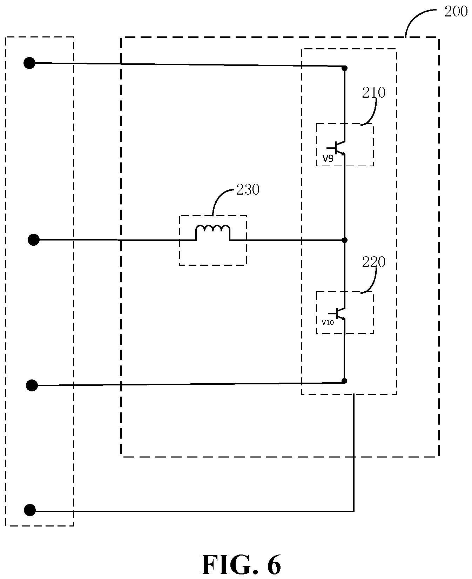

Since the first switch means 210 and the second switch means 220 are mainly responsible for controlling the turning on and off of the circuit, they mainly use the switch function. Therefore, the first switch means 210 and the second switch means 220 may each include no freewheeling diode, but only include a switch. As shown in Fig. 6, the first switch means 210 includes a third switch V9, and the second switch means 220 includes a fourth switch V10. The third switch V9 and the fourth switch V10 may be switching transistors or relay switches.

The first switch means 210 and the second switch means 220 only include switch structures, which can make the switch device more simply control the turning on and off of the circuit to form a charging loop or a discharging loop in the charging and discharging circuit, so as to heat a battery pack.

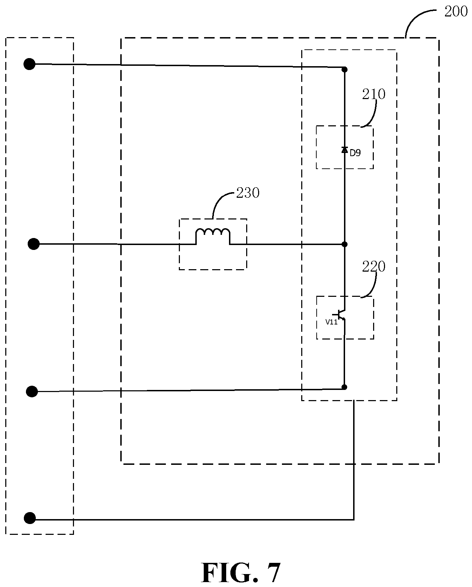

According to some embodiments of the present application, the first switch means 210 and the second switch means 220 may alternatively have other variant structures. As shown in Fig. 7, the first switch means 210 includes a third diode D9, and the second switch means 220 includes a fifth switch V 11. A cathode of the third diode D9 is connected to the positive electrode of the battery, an anode of the third diode D9 is connected to one terminal of the fifth switch V11, and the other terminal of the fifth switch V11 is connected to the negative electrode of the battery.

The control strategy of a structure using only one diode and one switch is simpler, and the diode is passively controlled and does not require active control. In this way, the charging loop or the discharging loop can be flexibly switched in the charging and discharging circuit, thereby forming an alternating current in the charging and discharging circuit.

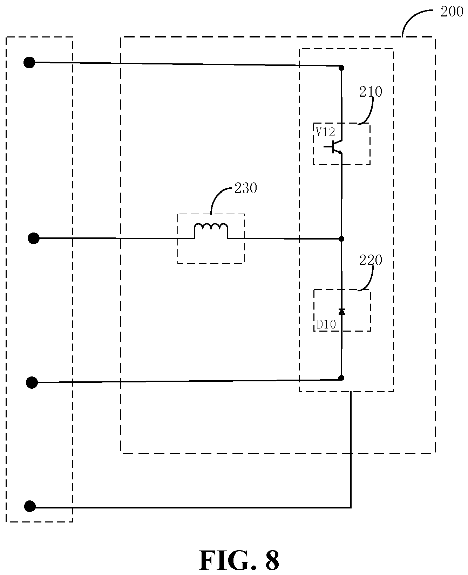

According to some embodiments of the present application, as shown in Fig. 8, the first switch means 210 includes a seventh switch V 12, and the second switch means 220 includes a fourth diode D10. One terminal of the seventh switch V12 is connected to the positive electrode of the battery, the other terminal of the seventh switch V12 is connected to a cathode of the fourth diode D10, and an anode of the fourth diode D10 is connected to the negative electrode of the battery.

The control strategy of a structure using only one diode and one switch is simpler, and the diode is passively controlled and does not require active control. In this way, the charging loop or the discharging loop can be flexibly switched in the charging and discharging circuit, thereby forming an alternating current in the charging and discharging circuit.

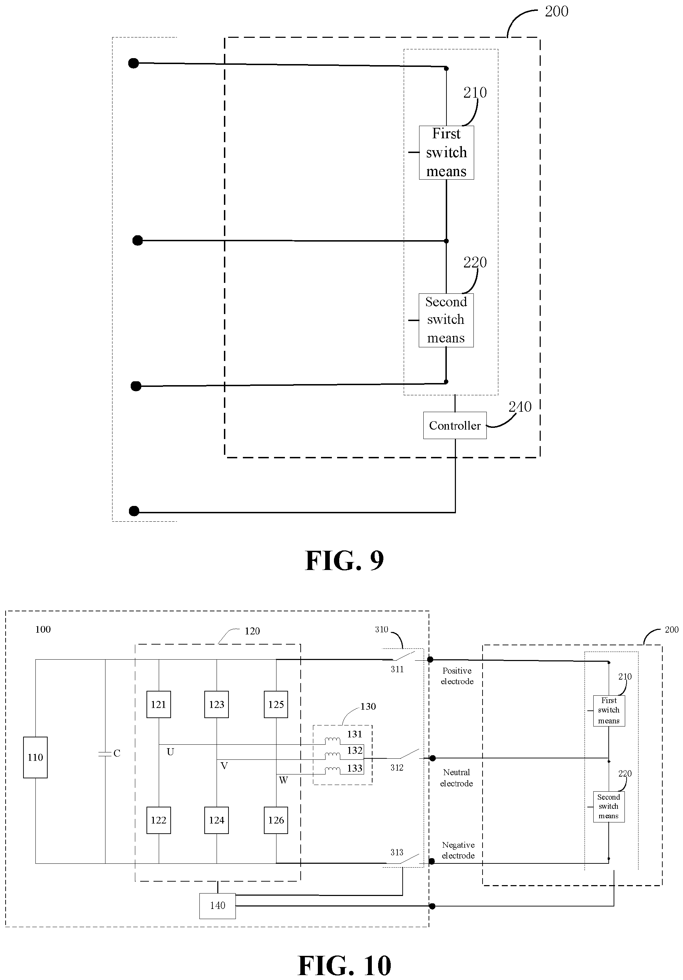

According to some embodiments of the present application, as shown in Fig. 9, the switch device 100 further includes a controller 240 arranged in the shell. A first terminal of the controller 240 is connected to the control terminal of the first switch means 210 and the control terminal of the second switch means 220, respectively, and a second terminal of the controller 240 is led out to the outside of the shell via a wire. The controller 240 can accurately control the first switch means 210 and the second switch means 220.

By providing the controller 240 in the switch device 100, the control efficiency of the first switch means and the second switch means can be improved, thereby improving the battery heating efficiency.

The present application also provides a motor control device used with the switch device 100. As shown in Fig. 10, the motor control device includes a motor inverter 120, a motor controller 140, and a high-voltage switch assembly 310 which are arranged in a shell, and a high-voltage harness interface and a low-voltage harness interface which are arranged on the shell. The motor control device, the battery 110 and the motor winding 130 form an electric loop.

The battery 110 and the motor winding 130 are led out to the high-voltage harness interface via the high-voltage switch assembly 310, and the high-voltage harness interface includes a neutral electrode terminal, a battery positive electrode terminal and a battery negative electrode terminal; and the motor controller 140 is led out to the low-voltage harness interface via a wire.

According to some embodiments of the present application, the high-voltage switch assembly 310 may include a positive electrode switch 311, a negative electrode switch 312, and a neutral electrode switch 313. A neutral electrode of the motor winding 130 is connected to the neutral electrode terminal via the neutral electrode switch 313; a positive electrode of the battery 110 is connected to the battery positive electrode terminal via the positive electrode switch 311; and a negative electrode of the battery 110 is connected to the battery negative electrode terminal via the negative electrode switch 313.

According to some embodiments of the present application, the high-voltage switch assembly 310 may include only a positive electrode switch 311 and a neutral electrode switch 313, or the high-voltage switch assembly 310 may include only a negative electrode switch 312 and a neutral electrode switch 313. This is not limited in the present application.

The switch device 100 establishes an electrical connection with the electric loop via the high-voltage harness interface and the low-voltage harness interface provided in the motor control device, so that the switch device 100 is controlled by the motor controller 140, to cause the switch device 100 to be started to operate in conjunction with the battery 110, the motor winding 130 and the motor inverter 120.

By providing the high-voltage switch assembly 310, when there is no need to connect the power battery to the switch device 100 for battery self-heating, the switches of the high-voltage switch assembly 310 are kept disconnected, thereby ensuring that the high-voltage harness interface is not energized to prevent people from accidentally getting electric shock.

The present application also provides a battery heating system, including the switch device 200 in the above various embodiments, and the motor control device in the above various embodiments. As shown in Fig. 10, the first terminal of the first switch means 210 is connected to the battery positive electrode terminal; the second terminal of the second switch means 220 is connected to the battery negative electrode terminal; the connection point between the first switch means 210 and the second switch means 220 is connected to the neutral electrode terminal; and the control terminal of the first switch means 210 and the control terminal of the second switch means 220 are connected to the low-voltage harness interface.

The power battery heating system composed of the motor control device, the motor inverter, the motor winding and the switch device 100 operates as follows during heating.

When the heating is started, the motor controller 140 controls the switches of the high-voltage switch assembly 310 to be closed. Then, the motor inverter 120, and the first switch means 210 and the second switch means 220 of the switch device 200 are cyclically switched between two operating modes.

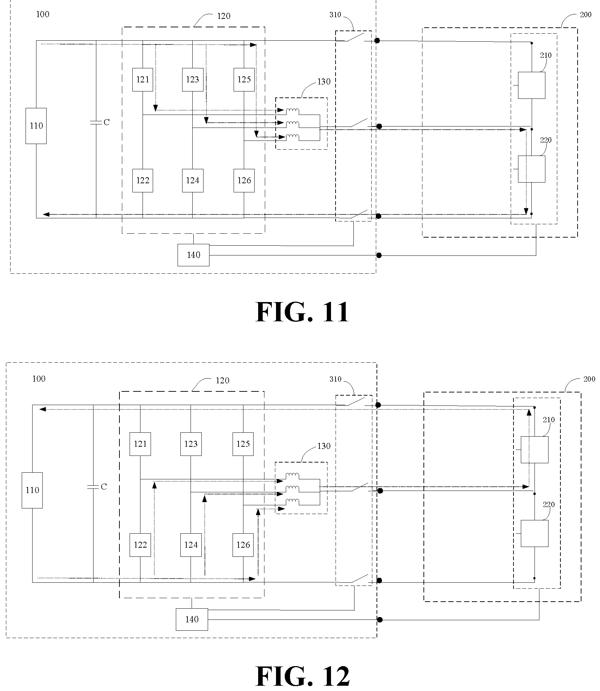

In a first operating mode, as shown in Fig. 11, the battery 110 is being discharged and the motor winding 130 stores energy.

In a second operating mode, as shown in Fig. 12, the energy stored in the motor winding 130 is released, and the battery 110 is being charged.

When the two operating modes are cycled, the motor winding 130 can be supplied with current in the same direction, greatly reducing the noise of the motor while heating the battery.

The embodiments of the present application also provide an electric apparatus, which includes a motor control device according to the above embodiments. The electric apparatus may be various electric vehicles.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application.

## Claims

1. A switch device, comprising a first switch means and a second switch means which are arranged in a shell, wherein
a second terminal of the first switch means and a first terminal of the second switch means are both connected to the outside of the shell;
a first terminal of the first switch means and a second terminal of the second switch means are respectively connected to the outside of the shell; and
a control terminal of the first switch means and a control terminal of the second switch means are connected to the outside of the shell.

2. The switch device according to claim 1, further comprising an energy storage means arranged in the shell, wherein a first terminal of the energy storage means is connected to the second terminal of the first switch means, the first terminal of the energy storage means is connected to the first terminal of the second switch means, and a second terminal of the energy storage means is connected to the outside of the shell.

3. The switch device according to claim 1 or 2, wherein the first switch means comprises a first switch and a first diode connected in parallel to each other, and the second switch means comprises a second switch and a second diode connected in parallel to each other.

4. The switch device according to claim 1 or 2, wherein the first switch means comprises a third switch, and the second switch means comprises a fourth switch.

5. The switch device according to claim 1 or 2, wherein the first switch means comprises a third diode, and the second switch means comprises a fifth switch.

6. The switch device according to claim 1 or 2, wherein the first switch means comprises a seventh switch, and the second switch means comprises a fourth diode.

7. The switch device according to claim 2, wherein the energy storage means comprises at least one inductor.

8. The switch device according to claim 1 or 2, further comprising a controller arranged in the shell, wherein a first terminal of the controller is connected to the control terminal of the first switch means and the control terminal of the second switch means respectively, and a second terminal of the controller is led out to the outside of the shell via a wire.

9. A motor control device, which forms an electric loop with a battery and a motor winding, the motor control device comprising a motor inverter, a motor controller and a high-voltage switch assembly which are arranged in a shell, and a high-voltage harness interface and a low-voltage harness interface which are arranged on the shell; wherein
the battery and the motor winding are led out to the high-voltage harness interface via the high-voltage switch assembly, and the high-voltage harness interface comprises a neutral electrode terminal, a battery positive electrode terminal and a battery negative electrode terminal; and
the motor controller is led out to the low-voltage harness interface via a wire.

10. The motor control device according to claim 9, wherein the high-voltage switch assembly comprises a positive electrode switch, a negative electrode switch and a neutral electrode switch;
a neutral electrode of the motor winding is connected to the neutral electrode terminal via the neutral electrode switch;
a positive electrode of the battery is connected to the battery positive electrode terminal via the positive electrode switch; and
a negative electrode of the battery is connected to the battery negative electrode terminal via the negative electrode switch.

11. A battery heating system, comprising the switch device of any one of claims 1 to 8, and the motor control device of claim 9 or 10; wherein
the first terminal of the first switch means is connected to the battery positive electrode terminal;
the second terminal of the second switch means is connected to the battery negative electrode terminal;
a connection point between the first switch means and the second switch means is connected to the neutral electrode terminal; and
the control terminal of the first switch means and the control terminal of the second switch means are connected to the low-voltage harness interface.

12. An electric apparatus, comprising the motor control device of claim 9 or 10.
